# EUROPEAN PATENT APPLICATION

(11) **EP 1 655 461 A1**
(43) Date of publication of application: **10.05.2006**
(21) Application number: 05023482.2
(22) Date of filing: 27.10.2005
(51) Int. Cl.: F01N 3/08, F01N 3/20, F01N 11/00, F02D 41/22, F02D 41/02, F02D 41/40, F02D 41/14

(54) **Exhaust emission control device of internal combustion engine**

(30) Priority: 04.11.2004 JP 2004320847
(71) Applicant: Mitsubishi Fuso Truck and Bus Corporation, Tokyo 108-8285 (JP)
(72) Inventor: Nakayama, Shinji Mitsubishi Fuso Truck and Bus Co., Minato-ku Tokyo 108-8285 (JP); Kouketsu, Susumu Mitsubishi Fuso Truck and Bus Co., Minato-ku Tokyo 108-8285 (JP); Tanabe, Keiki Mitsubishi Fuso Truck and Bus Co., Minato-ku Tokyo 108-8285 (JP); Sunohara, Daisuke Mitsubishi Fuso Truck and Bus Co, Minato-ku Tokyo 108-8285 (JP)
(74) Representative: Böck, Bernhard

(57) **Abstract**

An exhaust emission control device of an internal combustion engine includes a fuel supply unit provided in a fuel supply passage, for supplying a reducing agent directly to a NOx trap catalytic converter; an addition pressure detection unit (42) for detecting the supply pressure of the reducing agent supplied by the fuel supply unit; and a controller (50) for calculating the amount of NOx adsorbed by the catalytic converter. When the supply pressure of the reducing agent is almost zero (54), the controller prohibits calculation of NOx adsorption amount depending on the supply of the reducing agent (56), creates a rich state in a cylinder (58), carries out calculation of NOx adsorption amount depending on the created rich state (52), and causes release and reduction of the adsorbed Nox.

## Description

### BACKGROUND OF THE INVENTION

### Field of the Invention

This invention relates to an exhaust emission control device suitable for an internal combustion engine designed to cause release and reduction of NOx adsorbed by a NOx trap catalyst, by rich spike by out-of-cylinder rich operation.

### Description of the Related Art

Generally, the NOx trap catalyst adsorbs NOx (nitrogen oxide) contained in exhaust when the exhaust air-fuel ratio is lean, and releases and reduces the adsorbed NOx when the exhaust air-fuel ratio is rich. Specifically, this catalyst has a characteristic that it adsorbs NOx contained in exhaust in the form of nitrate salt in an oxygen excess state (oxidation atmosphere), and reduces the adsorbed NOx to nitrogen in a carbon-monoxide excess state (reduction atmosphere).

In an engine provided with this catalyst, rich spike, that is, cyclic changeover to rich operation before NOx adsorbed reaches an amount that saturates the catalyst, is carried out to suppress the performance degradation of the catalyst caused by increase in NOx adsorbed. By this, the catalyst is regenerated, so that the exhaust is purified satisfactorily.

Rich spike is performed by in-cylinder rich operation or by out-of-cylinder rich operation. Specifically, in-cylinder rich operation is performed by recirculating a large amount of exhaust to cause imperfect combustion and utilizing carbon monoxide (CO) discharged from the cylinder due to the imperfect combustion, as a reducing agent, or by supplying unburned fuel (HC) as a reducing agent into the cylinder in exhaust stroke by post (after) injection. Meanwhile, out-of-cylinder rich operation is performed by adding HC to an exhaust passage, or in other words, supplying fuel directly to the catalyst (Japanese Unexamined Patent Publication No. 2002-242780).

In this technique, pressure in a fuel addition line, namely a line through which HC is supplied directly to the catalyst is detected. If there is trouble such as malfunction of a fuel pump for supplying HC or fuel leakage, a controller sends out a signal for stopping the supply of HC and a signal for displaying a warning for a driver.

However, only by stopping the supply of HC and displaying a warning, error in the controller's calculation of the amount of adsorbed NOx cannot be prevented. Further, there remains concern that NOx in exhaust may not be reduced and discharged into the atmosphere as NOx, since the controller gives an instruction for the next release and reduction of NOx on the basis of an incorrect amount of NOx adsorbed. Thus, this technique has a problem to be solved in respect of the case where a reducing agent fails to be added to the catalyst.

### SUMMARY OF THE INVENTION

An object of this invention is to provide an exhaust emission control device of an internal combustion engine that can produce satisfactory effects even when a reducing agent fails to be added to a NOx trap catalyst (fail-safe).

An exhaust emission control device of an internal combustion engine according to this invention comprises an exhaust passage connected with a cylinder of the engine; a NOx trap catalytic converter provided in the exhaust passage, capable of adsorbing NOx contained in exhaust in lean operation and releasing and reducing the adsorbed NOx in rich operation; a supply means provided in the exhaust passage, for supplying a reducing agent directly to the NOx trap catalytic converter; a detection means for detecting the supply pressure of the reducing agent supplied by the supply means; and a controller for calculating the amount of NOx adsorbed by the catalytic converter, wherein when the supply pressure of the reducing agent is almost zero, the controller prohibits calculation of NOx adsorption amount depending on the supply of the reducing agent, creates a rich state in the cylinder, carries out calculation of NOx adsorption amount depending on the created rich state, and causes release and reduction of the adsorbed NOx.

Thus, in the exhaust emission control device according to this invention, while the NOx trap catalytic converter is caused to release and reduce NOx basically by out-of-cylinder rich operation, supply pressure in the fuel addition line is detected. When the supply pressure is almost zero, that is, the reducing agent is not added to the NOx trap catalytic converter, calculation of NOx adsorption amount depending on out-of-cylinder rich operation is prohibited. At the same time, according to a rich spike instruction given for the NOx trap catalytic converter, in-cylinder rich operation is performed to regenerate the NOx catalytic converter. Thus, when the reducing agent fails to be added to the NOx trap catalytic converter, appropriate alternative operation is performed to avoid increase in NOx (fail-safe). Consequently, reliability of the exhaust emission control device further improves.

### BRIEF DESCRIPTION OF THE DRAWINGS

FIG. 1 is a diagram showing structure of an engine system to which an exhaust emission control device of an internal combustion engine as an embodiment of the present invention is applied;
FIG. 2 is a block diagram showing control in the exhaust emission control device of FIG. 1; and
FIG. 3 is a block diagram showing control in another embodiment.

### DETAILED DESCRIPTION OF THE PREFERRED EMBODIMENTS

Referring to the drawings, embodiments of this invention will be described below.

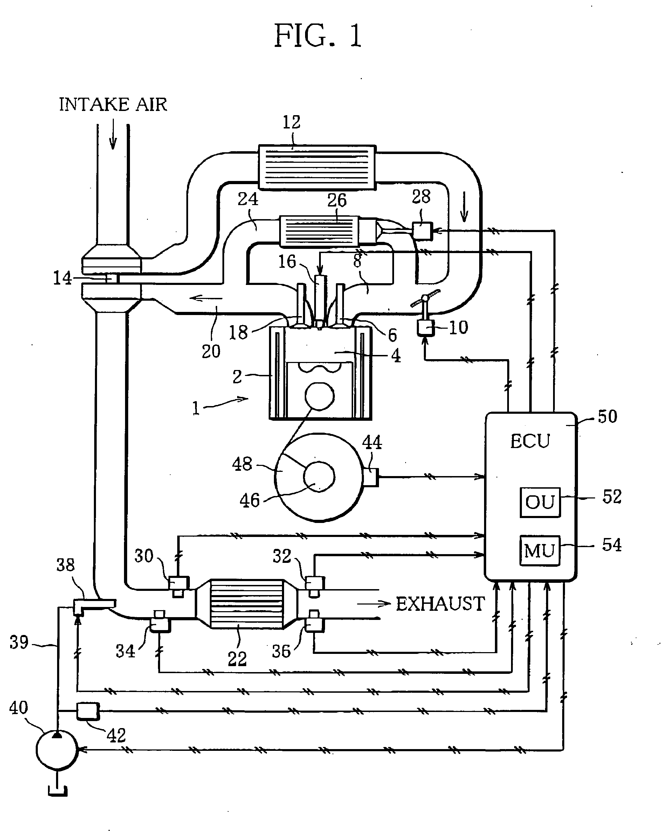

FIG. 1 is a diagram showing structure of an engine system. This system includes a diesel engine (hereinafter referred to simply as "engine") 1 to which an exhaust emission control device as an embodiment of this invention is applied. As shown in this figure, a fuel supply line 16, an intake passage 8 and an exhaust passage 20 are connected to each cylinder 2 of the engine 1. The line 16 includes a fuel injection unit, the passage 8 is the one through which fresh air is sent to a combustion chamber 4 when an intake valve 6 is opened, and the passage 20 is the one through which exhaust is sent from the combustion chamber 4 when an exhaust valve 18 is opened.

In the intake passage 8, on the upstream side, a supercharger 14 is provided. An air cleaner (not shown) is connected to the passage 8 near the upstream end thereof. An intake throttle 10 and an inter-cooler 12 are also provided in the passage 8. The intake throttle 10 adjusts the flow passage area of the passage 8, and the inter-cooler 12 cools fresh air flowing through the passage 8 to increase volumetric efficiency.

In the exhaust passage 20, on the downstream side, a NOx trap catalytic converter 22 is provided. The catalytic converter 22 adsorbs NOx contained in exhaust when the exhaust air-fuel ratio is lean, namely greater than the stoichiometric air-fuel ratio, and releases and reduces the adsorbed NOx when the exhaust air-fuel ratio is rich and the exhaust contains unburned fuel (HC) and/or carbon monoxide (CO) serving as a reducing agent. The catalytic converter 22 has a known structure.

From the exhaust passage 20 extends an EGR passage 24. At the forward end, the passage 24 is connected with the intake passage 8. An EGR cooler 26 and an EGR valve 28 are provided in the passage 24. The valve 28 is electrically connected to an electronic control unit (ECU) 50 and adjusts the flow passage area of the passage 24.

Fresh air from the air cleaner flows through the supercharger 14 into the intake passage 8, then reaches the cooler 12, then is adjusted by the throttle 10, and then flows into the combustion chamber 4 of each cylinder 2. Combustion of fuel supplied through the line 16 causes a crank shaft 46 and a flywheel 48 to operate. After the combustion ends, exhaust is discharged into the exhaust passage 20 and sent to the catalytic converter 22.

In the exhaust passage 20, a NOx sensor 30 and an exhaust temperature sensor 34 are provided at appropriate positions upstream of the catalytic converter 22. The sensor 30 detects NOx concentration, or in other words, NOx amount upstream of the catalytic converter 22, from output voltage. The sensor 34 detects exhaust temperature T_{E} in the passage 20. Further, a NOx sensor 32 and a catalyst temperature sensor 36 are provided at appropriate positions downstream of the catalytic converter 22. The sensor 32 detects NOx amount downstream of the catalytic converter 22. and the sensor 36 detects temperature Tc of the catalytic converter 22. These sensors 30, 32, 34 and 36 are electrically connected to the ECU 50.

In the exhaust passage 20, at an appropriate position upstream of the catalytic converter 22, an addition injector (supply means) 38 for supplying HC directly to the catalytic converter 22 is provided. The injector 38 is connected with a pump 40 by a fuel addition line 39. Pressure in the line 39 is detected by a fuel pressure sensor (detection means) 42. Also the sensor 42 is electrically connected to the ECU 50.

To the input side of the ECU 50, various sensors for detecting the operating state of the engine 1 such as a crank angle sensor 44 are electrically connected, in addition to the above-mentioned sensors 30, 32, 42, etc. To the output side of the ECU 50, various actuators such as an actuator for the injector 38 are electrically connected, in addition to the above-mentioned line 16, throttle 10, valve 28 and pump 40.

The catalytic converter 22 adsorbs NOx contained in exhaust when it has an oxidizing atmosphere, and the ECU 50 carries out rich operation periodically. In this embodiment, rich operation is carried out basically in the form of out-of-cylinder rich operation. Specifically, according to a rich spike instruction, HC forced by the pump 40 is supplied directly into exhaust through the injector 38 provided to the passage 20 to create conditions for rich operation. When the conditions for rich operation are created, NOx is released and reduced.

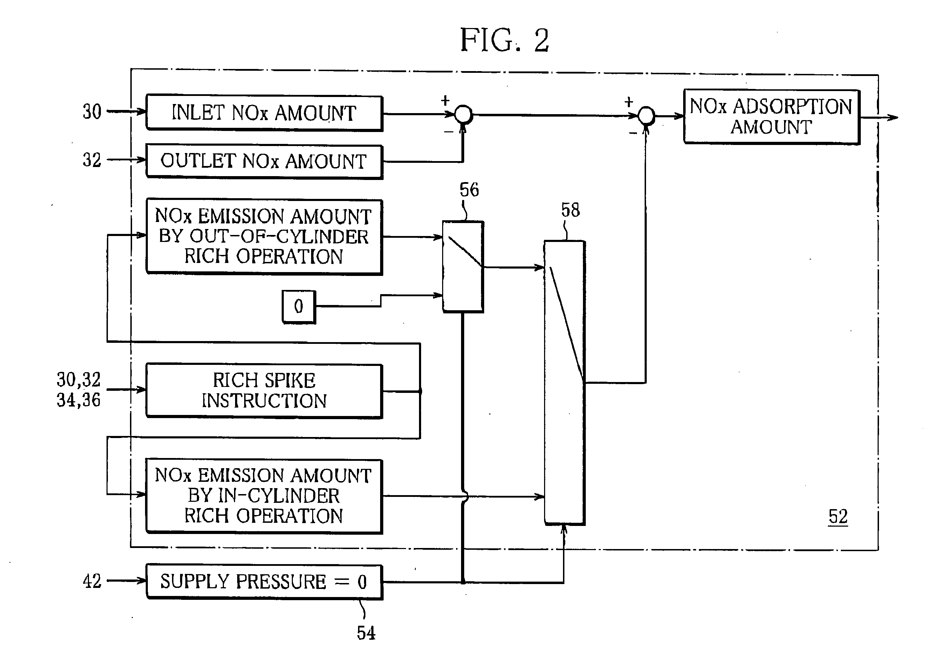

More specifically, as shown in FIG. 2, the ECU 50 includes an adsorption amount operation unit (OU) 52 and a combustion monitor unit (MU) 54. The MU 54 monitors the pressure in the line 39 on the basis of a detection signal from the sensor 42, and sends out a signal to the OU 52 when the HC supply pressure is almost zero. The HC supply pressure being almost zero is thought to indicate fuel leakage from the line 39, malfunction of the pump 40, etc.

The OU 52 estimates the amount of NOx adsorbed by the catalytic converter 22. Specifically, first on the basis of output signals from the sensors 30, 32, NOx amount on the inlet side of the catalytic converter 22 and NOx amount on the outlet side thereof are obtained, and the amount of NOx adsorbed (referred to as "adsorption amount") is calculated. Then, by subtracting the amount of NOx released and reduced by rich spike (referred to as "emission amount by rich spike") from the calculated adsorption amount, the current adsorption amount is estimated.

As understood from the above, as the emission amount by rich spike, basically the amount of NOx emitted by out-of-cylinder rich operation (referred to as "emission amount by out-of-cylinder rich operation"), namely the amount of NOx released and reduced by adding HC through the injector 38 is used. The emission amount by out-of-cylinder rich operation is obtained in advance, for example, from maps that are prepared depending on temperature T_{C} of the catalytic converter 22. temperature T_{E} of the passage 20, flow rate of exhaust SV, etc. and stored in the ECU 50.

When a rich spike instruction is given depending on signals from the sensors 30, 32, 34, 36, etc., the emission amount by out-of-cylinder rich operation is set and used for estimating the current adsorption amount.

However, when the sensor 42 detects the HC supply pressure which is almost zero so that the MU 54 sends out a signal to the OU 52, the OU 52 prohibits the calculation of the adsorption amount depending on out-of-cylinder rich operation. Specifically, an emission amount change unit 56 changes the emission amount by out-of-cylinder rich operation to zero to negate it in the estimation of the current adsorption amount.

Thus, when the HC supply pressure is almost zero, the amount of NOx released and reduced by out-of-cylinder rich operation is treated as zero. However, if nothing is done, NOx is not easily released and reduced. Hence, in the present embodiment, as one type of in-cylinder rich operation, post injection in which HC is supplied into the cylinders 2 in exhaust stroke is used, calculation of the adsorption amount depending on this post injection is carried out, and release and reduction of the adsorbed NOx is caused.

Specifically, when a rich spike instruction is given, the amount of NOx emitted by post injection (referred to as "emission amount by post injection") is set on the basis of output values from the sensors 30, 32, 34, 36, and supplied to a rich spike change unit 58. Also the emission amount by post injection is obtained in advance from maps stored in the ECU 50.

When the MU 54 sends out a signal, the change unit 58 chooses the emission amount by post injection. Then, the OU 52 estimates the current adsorption amount by subtracting the emission amount by post injection from the adsorption amount calculated on the basis of the output signals from the NOx sensors 30 and 32.

For the post injection as in the present embodiment, various restrictions are provided. Specifically, the number of times that rich spike by post injection is performed and the accumulated time of rich spike by post injection are restricted to the number of times and the time which does not cause lubricating oil for the engine 1 to exceed its dilution limit. This is because the fuel supplied by post injection does not contribute to power generated by the engine 1, and hence, it can dilute lubricating oil held in a crank case along the cylindrical wall of the combustion chamber 4, etc. By providing the above restrictions, dilution of the lubricating oil is prevented.

Further, post injection is restricted to the engine 1 operation with medium load or lower. This is because when the engine is operating with high load, post injection leads to increase in NOx in exhaust. By providing this restriction, the number of times that post injection is performed is reduced, NOx contained in exhaust is reduced, and the necessity of immediately stopping the engine 1 can be avoided.

As described above, the present embodiment is designed to perform alternative operation when the line 39, etc. are out of order (fail-safe).

While the catalytic converter 22 is caused to release and reduce NOx basically by out-of-cylinder rich operation, the sensor 42 for detecting the supply pressure in the line 39 is provided and the MU 54 monitors this pressure. When this pressure is almost zero, that is, HC is not added to the catalytic converter 22, the OU 52 prohibits the calculation of the adsorption amount depending on out-of-cylinder rich operation. At the same time, by the operation of the change unit 58, post injection is performed to regenerate the catalytic converter 22. Thus, when HC fails to be added to the catalytic converter 22, appropriate alternative operation is performed, so that increase in NOx is avoided (fail-safe). Consequently, reliability of the exhaust emission control device further improves.

Further, when the HC supply pressure is almost zero, the change unit 56 sets the emission amount by out-of-cylinder rich operation to zero. Hence, unlike the conventional case, incorrect estimation of the adsorption amount on the assumption that HC is property supplied is not continued. Thus, the accuracy of estimation of the adsorption amount improves, compared with the conventional case.

Further, while rich spike by post injection is performed as alternative operation, various restrictions are provided for the post injection. Thus, adverse effects of the post injection are minimized.

The above is the description of one embodiment of the present invention. The present invention is, however, not limited to the above embodiment.

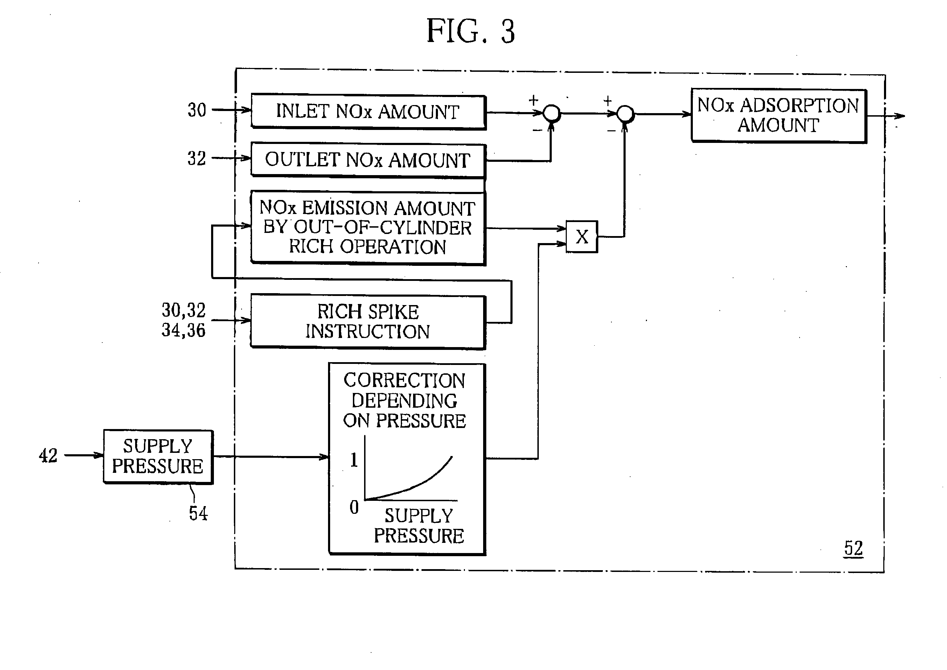

For example, in the above embodiment, alternative operation is performed by changing the way of rich spike from out-of-cylinder rich operation to in-cylinder rich operation. However, appropriate alternative operation can be performed using only out-of-cylinder rich operation. As shown in FIG. 3, in this embodiment, the emission amount by out-of-cylinder rich operation is used.

In the embodiment shown in FIG. 3, the OU 52 obtains NOx amount on the inlet side of the catalytic converter 22 and NOx amount on the outlet side thereof on the basis of output signals from the sensors 30, 32, and calculates the adsorption amount. Then, when a rich spike instruction is given depending on signals from the sensors 30, 32, 34, 36, etc., the emission amount by out-of-cylinder rich operation is set referring to the maps.

Here, if the HC supply pressure detected by the sensor 42 is not zero but less than a desired supply pressure, the MU 54 sends out a signal to the OU 52. The OU 52 sets a coefficient depending on the HC supply pressure detected. The coefficient is an index of what proportion of the fuel injected when the line 39, etc. are in order is actually injected into exhaust through the injector 38. The emission amount by out-of-cylinder rich operation, set in advance referring to the maps, is corrected by being multiplied by this coefficient. The amount of NOx actually emitted (released and reduced) by out-of-cylinder rich operation is calculated this way, and the current adsorption amount is estimated.

Thus, in this embodiment, although the rich spike cycle may be shortened, appropriate alternative operation is performed when HC fails to be added to the catalytic converter 22, so that increase in NOx is avoided. Consequently, also in this embodiment, reliability of the exhaust emission control device further improves (fail-safe).

The exhaust emission control device can be a combination of FIGS. 2 and 3. Specifically, first, when the HC supply pressure detected by the sensor 42 is less than a desired supply pressure, the OU 52 calculates the amount of NOx actually emitted (released and reduced), by correcting the emission amount by out-of-cylinder rich operation, using the coefficient, and estimates the current adsorption amount.

Next, when the HC supply pressure detected by the sensor 42 is almost zero, that is, HC is not added to the catalytic converter 22, the OU 52 uses the emission amount by out-of-cylinder rich operation which has been set to zero by the change unit 56. After this, as long as the HC supply pressure remains almost zero, when a rich spike instruction is given, post injection is performed and the current adsorption amount is estimated by subtracting the emission amount by post injection. In this embodiment, more appropriate alternative operation is performed.

Although in the above-described embodiments, the MU 54 monitors the value detected by the fuel pressure sensor 42, the MU 54 may monitor the value detected by the flow rate sensor. Further, although the change unit 58 changes out-of-cylinder rich operation to post injection, out-of-cylinder rich operation may be changed to in-cylinder rich operation using CO emitted due to imperfect combustion caused by recirculating a large amount of exhaust and utilizing the valve 28 and the throttle 10.

Further, the engine is preferably a diesel engine but not limited to it. The exhaust emission control device according to this invention is applicable to all the engine systems that have a NOx trap catalytic converter in an exhaust passage and are capable of rich operation.

## Claims

1. An exhaust emission control device of an internal combustion engine, comprising an exhaust passage (20) connected with a cylinder of the engine; a NOx trap catalytic converter (22) provided in the passage, capable of adsorbing NOx contained in exhaust in lean operation and releasing and reducing the adsorbed NOx in rich operation; a supply means (38) provided in the passage, for supplying a reducing agent directly to the catalytic converter; a detection means (42) for detecting the supply pressure of the reducing agent supplied by the supply means; and a controller (50) for calculating the amount of NOx adsorbed by the catalytic converter, **characterized in that**
when the supply pressure of the reducing agent is almost zero (54), the controller prohibits calculation of NOx adsorption amount depending on the supply of the reducing agent (56), creates a rich state in the cylinder (58), carries out calculation of NOx adsorption amount depending on the created rich state (52), and causes release and reduction of the adsorbed NOx.

2. The exhaust emission control device of the internal combustion engine according to claim 1, **characterized in that**
when the supply pressure of the reducing agent is almost zero, the controller treats the amount of NOx emitted by the supply of the reducing agent, as zero, to negate it in the calculation of the amount of adsorbed NOx.

3. The exhaust emission control device of the internal combustion engine according to claim 1, **characterized in that**
when the supply pressure of the reducing agent is almost zero, the controller performs rich spike by post injection under specific restrictions.

4. The exhaust emission control device of the internal combustion engine according to claim 3, **characterized in that**
the number of times that the rich spike by post injection is performed or the accumulated time of the rich spike by post injection is restricted to the number of times or the time which does not cause lubricating oil for the engine to exceed a dilution limit.

5. The exhaust emission control device of the internal combustion engine according to claim 3, wherein
the rich spike by post injection is restricted to the engine operation with medium load or lower.

6. An exhaust emission control device of an internal combustion engine, comprising an exhaust passage (20) connected with a cylinder of the engine; a NOx trap catalytic converter (22) provided in the passage, capable of adsorbing NOx contained in exhaust in lean operation and releasing and reducing the adsorbed NOx in rich operation; a supply means (38) provided in the passage, for supplying a reducing agent directly to the catalytic converter; a detection means (42) for detecting the supply pressure of the reducing agent supplied by the supply means; and a controller (50) for calculating the amount of NOx adsorbed by the catalytic converter, **characterized in that**
when the supply pressure of the reducing agent is less than a specific pressure (54), the controller calculates the amount of the reducing agent supplied, on the basis of the detected supply pressure, carries out calculation of NOx adsorption amount depending on the supply of the reducing agent (52), and causes release and reduction of the adsorbed NOx.
